# EUROPÄISCHE PATENTSCHRIFT

(11) **EP 3 590 234 B1**
(45) Veröffentlichungstag und Bekanntmachung des Hinweises auf die Patenterteilung: **26.08.2020**
(21) Anmeldenummer: 18711223.0
(22) Anmeldetag: 06.03.2018
(51) Int. Cl.: H04L 12/40

(54) **ANORDNUNG UND VERFAHREN FÜR EIN FLUGZEUG ZUR ÜBERTRAGUNG EINES ANALOGEN AUDIOSIGNALS**
ASSEMBLY AND METHOD FOR AN AIRPLANE FOR TRANSMITTING AN ANALOG AUDIO SIGNAL
AGENCEMENT ET PROCÉDÉ POUR UN AVION POUR LA TRANSMISSION D'UN SIGNAL AUDIO ANALOGIQUE

(30) Priorität: 08.04.2017 DE 102017003434
(43) Veröffentlichungstag der Anmeldung: 08.01.2020
(73) Patentinhaber: Diehl Aerospace GmbH, 88662 Überlingen (DE)
(72) Erfinder: HOCHE, Peter, 61389 Schmitten (DE); SALOMON, Uwe, 63067 Offenbach (DE)
(74) Vertreter: Diehl Patentabteilung
(86) Internationale Anmeldenummer: PCT/EP2018/000088
(87) Internationale Veröffentlichungsnummer: WO 2018/184714

(56) Entgegenhaltungen:
- EP-A1- 2 811 695
- DE-A1-102006 044 901
- GB-A- 1 596 195
- US-A1- 2015 055 785

## Beschreibung

Die Erfindung betrifft eine Anordnung und ein Verfahren für ein Flugzeug zur Übertragung eines analogen Audiosignals von einer Signalquelle zu einer Signalsenke.

In Flugzeugen ist in bestimmten Fällen eine insbesondere einfache, sichere und energiesparende Übertragung eines Audiosignals von einer Signalquelle zu einer Signalsenke gewünscht. Anforderung ist hierbei unter anderem, dass das Flugzeugpersonal mittels Mikrofonen, Lautsprechern und der zugehörigen Verkabelung Durchsagen an Flugpassagiere machen kann. Ein derartiger Fall ist beispielsweise ein Notfall (Emergency) und dabei die Bereitstellung eines "Public Address System" gemäß 14 CFR 25.1423. Aus der Praxis ist es bekannt, dass Flugzeuge für die oben genannten Durchsagen ein analog arbeitendes Mikrofon-/Lautsprechersystem mit entsprechender Verkabelung aufweisen.

GB 1 5 96 195 A offenbart eine Kombination eines Passenger-Address-Systems mit einem Inflight-Entertainment-System in einem Flugzeug, wobei beide Systeme die selben Übertragungsleitungen benutzen. Auf der Eingangsseite kann das System zwischen beiden Betriebsarten umgeschaltet werden.

US 2015/0055785 A1 offenbart ein Unterhaltungssystem an Bord eines Flugzeugs an dem ein Server ein analoges Audiosignal oder ein anderes analoges Kommunikationssignal an angeschlossene Kopfhörer verteilen kann. Dazu werden Leitungen verwendet, die sonst zur Übertragung eines Digitalsignals zwischen Server und Kopfhörer verwendet werden. Es wird bevorzugt dann ein Analogsignal verwendet, wenn ein Handshake für die digitale Übertragung fehlschlägt.

EP 2 811 695 A1 offenbart ein System in dem ein gemeinsam genutztes Medium dazu genutzt wird, um digitale und analoge Sensorsignale zu übertragen. Bestimmte Zeitschlitze können dazu verwendet werden, ein analoges Signal, vorzugsweise ein PWMkodiertes Datensignal eines Sensors zu übertragen. Ein Busteilnehmer kann einen "gated time encoder" in Verbindung mit einem Schalter enthalten, der für die Dauer eines oder mehrerer Zeitschlitze aktiviert werden kann, um ein analoges Signal zu übertragen.

DE 10 2006 044 901 A1 offenbart ein System, bei dem Schaltungen an einen Eindrahtbus angeschlossen werden können, auf dem nicht nur digitale Kommandos und Informationen fließen, sondern auch analoge Signalspannungen übertragen werden können. In einem sogenannten Analoglesemodus beginnt ein selektierter Teilnehmer, ein Analogsignal auf den Bus zu treiben. Nichtselektierte Teilnehmer befinden sich dabei im Analogsignal-Leerlaufmodus und beobachten den Bus passiv, um das Ende des Analoglesemodus zu erkennen. Dies wird vom Wirt ausgelöst, indem er seine Treiber aktiviert und gegen das Analogsignal treibt, so dass wiederum eine Strombegrenzung in dem selektierten Teilnehmer anspricht und dieser den Quittungmodus betritt. Im Quittungmodus gibt der Teilnehmer einen fest vorgegebenen digitalen Pegel auf dem Bus aus, an dem der Wirt feststellen kann, ob sein Abbruch des Analoglesemodus erfolgreich war.

Aufgabe der Erfindung ist es, die Übertragung des oben genannten analogen Audiosignals zu verbessern.

Die Aufgabe wird gelöst durch eine Anordnung gemäß Patentanspruch 1 für ein Flugzeug zur Übertragung eines analogen Audiosignals von einer Signalquelle der Anordnung zu einer Signalsenke der Anordnung. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Die Anordnung enthält eine mindestens zweiadrig ausgeführte Leitung für das Flugzeug. Die Anordnung enthält ein erstes Schaltelement. Das erste Schaltelement ist dazu ausgebildet bzw. verbindet in einem ersten Betriebszustand der Anordnung die Leitung (insbesondere deren erstes Ende) mit einem ersten digitalen Transceiver des Flugzeugs. In einem zweiten Betriebszustand verbindet es die Leitung (ggf. erstes Ende) mit der analogen Signalquelle für das Audiosignal.

Die Anordnung enthält ein zweites Schaltelement. Dieses ist dazu ausgebildet bzw. verbindet im ersten Betriebszustand die Leitung (insbesondere deren zweites Ende) mit einem zweiten digitalen Transceiver des Flugzeugs. Im zweiten Betriebszustand verbindet es die Leitung (ggf. zweites Ende) mit der analogen Signalsenke für das Audiosignal.

Im ersten Betriebszustand ist die Leitung als digitaler Datenbus zur Übertragung von Daten zwischen den beiden digitalen Transceivern betrieben. Im zweiten Betriebszustand ist die Leitung als analoge Signalleitung zur Übertragung des analogen Audiosignals von der Signalquelle zu der Signalsenke betrieben.

Gemäß der Erfindung wird also die Anordnung in zwei Betriebszuständen betrieben. Im ersten Betriebszustand sind die beiden digitalen Transceiver zum digitalen Austausch über die Leitung in Form eines digitalen Datenbusses verbunden. Beispielweise werden dabei Audiodaten hochqualitativ, z.B. in CD-Qualität, rein digital vom ersten digitalen Transceiver zum zweiten digitalen Transceiver übertragen. Im zweiten Betriebszustand bildet die selbe Leitung eine analoge Signalleitung zur rein analogen Verbindung der Signalquelle mit der Signalsenke, um das analoge Audiosignal über die Signalleitung von der Signalquelle zur Signalsenke zu übertragen.

Insbesondere sind die Signalquelle und/oder der erste Transceiver Teil einer Eingabeeinheit und/oder die Signalsenke und/oder der zweite Transceiver Teil einer Ausgabeeinheit. Die entsprechenden Elemente können jedoch auch außerhalb der Eingabeeinheit bzw. Ausgabeeinheit liegen und lediglich in dieser mit der Leitung verbunden bzw. an diese angeschlossen sein bzw. werden.

Gemäß der Erfindung kann eine einzige bzw. die selbe Leitung sowohl im ersten Betriebszustand digital zu beliebigen Zwecken als auch im zweiten Betriebszustand zur Übertragung des Audiosignals genutzt werden. Die Leitung in Form des digitalen Datenbusses erfüllt eine Doppelfunktion. Eine zusätzliche Verkabelung für die analoge Übertragung des Audiosignals entfällt damit, was zu einer Kosten- und Gewichtsersparnis im Flugzeug führt.

Gemäß der Erfindung wird also eine digitale Funktion, insbesondere Audiofunktion in CD-Qualität, in einer Flugzeugkabine bei gleichzeitiger Berücksichtigung der Anforderungen gemäß 14 CFR 25.1423 an ein Passenger-Adress-System für den Emergencyfall realisiert (erster / zweiter Betriebszustand). Die Anordnung bzw. Leitung für eine digitale Audioübertragung in CD-Qualität weist also auch die (zeitversetzte) Möglichkeit eines analogen Backup für die Passenger-Adress-Funktion im Emergencyfall auf. Die Erfindung kombiniert also beide Übertragungsvarianten (digital, analog) unter Nutzung der selben Leitungs- bzw. Bushardware.

In einer bevorzugten Ausführungsform der Erfindung ist die Leitung eine CAN-Bus-Leitung. Gemäß dieser Ausführungsform erfolgt also im ersten Betriebszustand eine digitale Datenübertragung, insbesondere Audioübertragung über einen CAN-Bus. Dieser wird damit regulär bzw. bestimmungsgemäß verwendet. Im Zweiten Betriebszustand erfolgt über die Leitung des CAN-Busses eine analoge Audioübertragung. Der CAN-Bus wird also im zweiten Betriebszustand als analoge Signalleitung zweckentfremdet. CAN-Bus-Leitungen finden im Flugzeug ohnehin bereits weit verbreitet Einsatz, weshalb die Anordnung dadurch einfach und kostengünstig wird.

In einer bevorzugten Ausführungsform ist der erste Betriebszustand ein regulärer Normalbetrieb der Anordnung und der zweite Betriebszustand ein Notfallbetrieb der Anordnung. Somit kann die Anordnung - bzw. zumindest deren Ressource in Form der Leitung - im Normalbetrieb zur beliebigen digitalen Datenübertragung im Flugzeug genutzt werden. Im Notfall erfüllt dann die Anordnung bzw. zumindest die Leitung als Doppelfunktion die oben genannte Notfallfunktionalität. Somit werden Ressourcen und damit Kosten und Aufwand im Flugzeug eingespart.

In einer bevorzugten Ausführungsform ist die Signalsenke eine analoge Lautsprechereinheit. Alternativ oder zusätzlich ist die Signalquelle eine analoge Mikrofoneinheit. Lautsprecher- und Mikrofoneinheit können hierbei entweder einzig einen Lautsprecher und ein Mikrofon, aber auch vor- oder nachgeschaltete Verstärker, Signalaufbereitung, Filter usw. enthalten. Wie oben sinngemäß erläutert, können auch eine oder mehrere Komponenten der Lautsprecher- und Mikrofoneinheit wieder innerhalb oder außerhalb der Ein- bzw. Ausgabeeinheit angeordnet sein. In diesem Fall kann das Audiosignal besonders einfach über ein Mikrofon eingegeben und über einen Lautsprecher ausgegeben werden.

In einer bevorzugten Ausführungsform enthält das Flugzeug eine Ausgabeeinheit in Form einer Passenger-Service-Unit (PSU) bzw. ist ein Teil dieser. Alternativ oder zusätzlich enthält es eine Eingabeeinheit in Form einer Zentraleinheit, die zur Versorgung der Ausgabeeinheit mit Daten im ersten Betriebszustand ausgebildet ist oder ist ein Teil dieser. Die Anordnung ist dann für ein derartiges Flugzeug bestimmt. Insbesondere sind die PSU und/oder die Zentraleinheit Teil der Anordnung. Insbesondere versorgt die Zentraleinheit alle PSUs des Flugzeugs bzw. können alle PSUs von hieraus zentral angesprochen, gesteuert, versorgt, ausgelesen, bedient usw. werden. Jede der PSUs ist hierbei mindestens einem Sitzplatz für einen Passagier zugeordnet bzw. für diesen zuständig. Eine entsprechende PSU ist ein handelsübliches und bekanntes Produkt und enthält in bekannter Weise beispielsweise einen Audioausgang in Form eines Lautsprechers oder einer Kopfhörerbuchse, ein Videodisplay, einen Rufknopf, um Flugzeugpersonal zum Sitzplatz zu rufen, Signalleuchten wie Anschnallzeichen, Nicht-Rauchen-Anzeigen etc. Diese stellen dann die zweiten Transceiver dar bzw. sind über diese an die Leitung angebunden. Die Zentraleinheit stellt hierbei beispielsweise im ersten Betriebszustand Audiodaten in CD-Qualität, Videodaten, Daten für Serviceanzeigen an den PSUs zur Verfügung und ist z.B. zum Empfang und zur Weiterverarbeitung bzw. Signalisierung von Rufzeichen der PSUs ausgebildet. Auch diese Aufgaben werden von entsprechenden ersten Transceivern erfüllt bzw. sind entsprechende Geräte oder Komponenten über die ersten Transceiver an der Leitung angeschlossen. Gemäß der Erfindung erfüllen Ausgabeeinheit und Eingabeeinheit im zweiten Betriebszustand damit in einer Doppelfunktionalität auch die Einspeisung bzw. Einleitung und Ausgabe bzw. Weiterleitung des analogen Audiosignals. Durch die entsprechende Doppelfunktionalität werden weitere Hardwarekomponenten im Flugzeug eingespart.

In einer bevorzugten Ausführungsform ist der erste Betriebszustand derjenige, in dem sich die Anordnung nach einem Einschaltvorgang befindet. Alternativ oder zusätzlich sind im zweiten Betriebszustand alle für die Übertragung des Audiosignals nicht benötigten Komponenten der Anordnung ausgeschaltet, insbesondere die digitalen Transceiver. Ausgeschaltet bedeutet, dass diese keine oder nur eine unwesentliche Energieaufnahme aufweisen. Insbesondere werden alle digitalen Komfortfunktionalitäten der Anordnung ausgeschaltet bzw. deaktiviert oder energielos geschaltet, beispielsweise Displays, Leseleuchten, digitale Audio- und Videoprozessoren in den PSUs bzw. entsprechende Komponenten zur digitalen Signalverarbeitung, -eingabe und -ausgabe in der Zentraleinheit.

Dank dieser Ausführungsform befindet sich die Anordnung im Betrieb stets zunächst im ersten Betriebszustand, ist also zur digitalen Übertragung bereit. So ist es möglich, im ersten Betriebszustand vor Umschaltung in den zweiten Betriebszustand ein digitales Kommando über die Leitung an die Ausgabeeinheiten bzw. zweiten Transceiver mit entsprechenden Ausschalt- und Deaktivierungsbefehlen zu senden, um alle für den zweiten Betriebszustand nicht benötigten Komponenten zu deaktivieren. Sodann kann auf den zweiten Betriebszustand umgeschaltet werden. Da dann jedoch keine digitale Kommunikationsmöglichkeit, insbesondere Empfangsmöglichkeit (etliche ausgeschaltete Komponenten) in der Ausgabeeinheit besteht, wäre ein Rückschalten in den Normalbetrieb (erster Betriebszustand) der abgeschalteten Komponenten nicht einfach wieder möglich. Dies wird dann gelöst durch ein insbesondere kurzzeitiges vollständiges Ausschalten der Anordnung bzw. Ein- und/oder Ausgabeeinheiten. Bei Rückkehr der Betriebsspannung bzw. deren Einschalten gelangen diese dann wieder in den ersten Betriebszustand und erreichen wieder volle Funktionalität.

Durch die Abschaltung unbenötigter Komponenten im zweiten Betriebszustand erfolgt eine Energieeinsparung, was besonders in einem Notbetrieb von Vorteil ist, um möglichst lange Notenergie zur Verfügung zu haben.

In einer bevorzugten Ausführungsform ist die Anordnung im ersten Betriebszustand mindestens aus einem regulären Flugzeugbordnetz und im zweiten Betriebszustand mindestens aus einem Notversorgungsnetz mit Energie versorgt. "Regulär" bedeutet den üblichen störungsfreien Betrieb des Flugzeuges, in dem ausreichend Energie zur Verfügung steht. So ist sichergestellt, dass im ersten, in der Regel regulären, Betriebszustand eine ausreichende Leistungsversorgung der Anordnung über das reguläre Flugzeugbordnetz gewährleistet ist, um vielfältige, auch Komfortfunktionen zu realisieren. Im zweiten Betriebszustand ist durch die Versorgung aus dem Notversorgungsnetz sichergestellt, dass die Anordnung zumindest zur analogen Audioübertragung auf jeden Fall so lange wie möglich in Betrieb bleiben kann, so lange das Notversorgungsnetz noch aktiv ist. Das Flugzeugbordnetz ist zum Beispiel das herkömmliche 28 Volt Bordnetz. Das Notversorgungsnetz ein 28 Volt essential bus.

In einer bevorzugten Variante dieser Ausführungsform ist die Signalquelle, wie oben erläutert, aus dem regulären Flugzeugbordnetz und/oder dem Notversorgungsnetz versorgt. Die Leitung und/oder die Signalsenke wiederum ist aus der Signalquelle und/oder einer Eingabeeinheit, wie vorliegend beschrieben, z.B. einer Zentraleinheit, versorgt, d.h. nur indirekt über die Signalquelle aus diesen Versorgungsnetzen versorgt und weist somit keine eigene Schnittstelle zu den Versorgungsnetzen auf. Auch die Leitung ist somit aus der Signalquelle mit Energie versorgt. Dies spart Verkabelungsaufwand im Flugzeug.

In einer bevorzugten Ausführungsform ist das erste und/oder das zweite Schaltelement ein elektronisches Schaltelement. Die Anbindung bzw. Umschaltung der Leitung an die jeweiligen Analog- oder Digitalelemente erfolgt also zum Beispiel chipintern bzw. auf elektronischem Wege, beispielsweise durch eine Transistorschaltung oder ähnliches und nicht durch ein diskretes mechanisches Schaltelement. So wird die Umschaltung verschließärmer.

In einer alternativen Ausführungsform enthält das erste und/oder zweite Schaltelement ein diskretes Schaltelement. Das Schaltelement dient der galvanischen Verbindung der Leitung mit der Signalquelle und/oder mit der Signalsenke im zweiten Betriebszustand durch einen analogen Leitungspfad. Im ersten Betriebszustand erfolgt dagegen eine galvanische Trennung des Leitungspfades. So kann die Herstellung des analogen Signalweges besonders sicher und zuverlässig erfolgen.

Die Aufgabe der Erfindung wird auch gelöst durch ein Verfahren gemäß Patentanspruch 11 für ein Flugzeug zur Übertragung eines analogen Audiosignals von einer Signalquelle zu einer Signalsenke des Flugzeuges. Das Verfahren basiert auf einem Flugzeug, das auch eine mindestens zweiadrig ausgeführte Leitung enthält. Die Leitung ist in einem zweiten Betriebszustand mit der analogen Signalquelle für das Audiosignal und mit der analogen Signalsenke für das Audiosignal verbindbar. Bei dem Verfahren wird die Leitung in einem ersten Betriebszustand als digitaler Datenbus zur Übertragung von Daten betrieben. In einem zweiten Betriebszustand wird die Leitung als analoge Signalleitung betrieben. Zur Übertragung des Audiosignals wird die Leitung in den zweiten Betriebszustand gebracht und das Audiosignal wird von der Signalquelle über die Leitung zur Signalsenke übertragen.

Das Verfahren und zumindest ein Teil dessen Ausführungsformen sowie die jeweiligen Vorteile wurden sinngemäß bereits im Zusammenhang mit der erfindungsgemäßen Anordnung erläutert.

In einer bevorzugten Ausführungsform wird die Leitung im ersten Betriebszustand mit einem ersten digitalen Transceiver und mit einem zweiten digitalen Transceiver verbunden.

In einer bevorzugten Ausführungsform werden die Leitung im ersten Betriebszustand mindestens aus einem regulären Flugzeugbordnetz mit der Energie versorgt und im zweiten Betriebszustand mindestens die Leitung und die Signalquelle und Signalsenke aus einem Notversorgungsnetz mit Energie versorgt, falls diese jeweils überhaupt Energie benötigen.

In einer bevorzugten Ausführungsform wird die Leitung mit Hilfe eines diskreten Schalters als erstem und/oder zweitem Schaltelement oder einem entsprechenden Teil dessen im zweiten Betriebszustand mit der Signalquelle und/oder mit der Signalsenke durch einen analogen Leitungspfad galvanisch verbunden. Im ersten Betriebszustand wird mit Hilfe des diskreten Schalters der Leitungspfad galvanisch getrennt.

In einer bevorzugten Ausführungsform wird das Verfahren mit Hilfe der erfindungsgemäßen Anordnung durchgeführt.

Die Erfindung beruht auf folgenden Erkenntnissen, Beobachtungen bzw. Überlegungen und weist noch die nachfolgenden Ausführungsformen auf. Die Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Moderne Flugzeuge weisen üblicherweise ohnehin eine digitale Verkabelung, insbesondere ein hochqualitatives Audiosystem auf, bei dem Audiodaten (Musik, Videoton) in hoher Qualität zu den Sitzplätzen von Passagieren übermittelt werden. Hierbei handelt es sich um voll digitale Systeme, welche beispielsweise die Datenübertragung über einen CAN-Bus verwirklichen. Bei den bekannten Systemen erfolgt also eine digitale Übertragung über den CAN-Bus mit diversen Codecs. Bekannt sind auch rein analoge Varianten.

Ein entsprechender CAN-Bus ist in der Regel dreiadrig ausgeführt mit zwei Datenleitungen und einer Masseleitung und kann daher auch als analoge Signalleitung zweckentfremdet werden.

Gemäß der Erfindung ergibt sich ein erheblicher Einsparungsaufwand an zu verlegenden Kabeln im Flugzeug. Gemäß der Erfindung ergibt sich insbesondere eine 28 Volt Gleichspannungsversorgung der PSU aus einer Eingabeeinheit in Form eines Zentralcomputers zur Steuerung der PSUs. Während des Normalbetriebs ist die Zentraleinheit und damit die PSUs über das normale 28 Volt Gleichstrombordnetz versorgt. Alle Systeme der PSU, zum Beispiel Prozessoren etc. sind aktiv. In der PSU ist digitale Audio-CD-Qualität verfügbar. Ausgaben erfolgen zum Beispiel auf einem Display oder über LEDs. Im Notfall oder Passenger-Adress-Fall gemäß CS 25.1423 ist die Zentraleinheit und damit die PSUs aus der Notversorgung ("essential bus") versorgt. Sämtliche Verarbeitung in der PSU ist ausgeschaltet. Es steht eine analoge Audioübertragung zur Verfügung.

Im normalen Betrieb werden also die PSUs von einem zentralen Rechner versorgt und mit 28 Volt Gleichspannung aus dem normalen Netz des Flugzeugs versorgt. Audiodaten werden in CD-Qualität parallel an alle PSUs über einen Bus übertragen. Der CAN-Bus funktioniert als Hardware- und Protokollebene. Es erfolgt die Verwendung eines Audio-codecs. Eine Dekodierung und Verstärkung der Audiodaten findet in der Processing-Einheit der PSUs statt. Gleichzeitig kann jede PSU andere Kommandos, Schaltzustände etc. empfangen und eigene an die zentrale Einheit versenden (Passenger Request, ...).

Im Notfallbetrieb oder Passenger-Adress-Betrieb CS 25.1423 versorgt der zentrale Rechner die PSU aus dem 28 Volt Gleichstrom- (essential) Bus. Über den CAN-Bus werden alle PSUs per Befehl angewiesen, Ihre Processing-Einheit und alle weiteren evtl. vorhandenen Komponenten, Displays, Lampen etc. abzuschalten. Danach werden keine digitalen Daten mehr über diesen Bus gesendet. Aktiv bleibt nur noch der Ausgangsverstärker jeder PSU, dessen Eingang gleichzeitig auf den CAN-Bus geschaltet wird, nunmehr analog. Der notwendige Stromverbrauch sinkt dadurch signifikant, zum Beispiel um 1 Kilowatt.

Die Audiodaten werden nun analog auf die physikalische Ebene des CAN-Busses eingekoppelt und in den PSUs jeweils entsprechend auf den Ausgangsverstärker geschaltet. Dieser Modus wird durch einen Aus- und Einschaltvorgang der PSUs - gesteuert durch den zentralen Rechner - beendet. Nach Power-Up arbeiten die PSUs wieder im Normalmodus. Nach dem Einschaltvorgang liegt wieder die normale 28 Volt DC-Spannungsversorgung an.

Alternativ kann ein Teil der Übertragungsstrecke für das analoge Audiosignal, insbesondere der Verbindung von der Signalquelle zur Leitung auch als Digitalverbindung ausgeführt sein. Ein D-/A-Umsetzer ist dann zwischen Eingabeeinheit und Leitung vorhanden, um das analoge Audiosignal für die Übertragung über die Leitung zu erzeugen oder zu rekonstruieren.

Im Normalbetrieb ist also insbesondere die PSU über 28V DC versorgt, digitale Verarbeitung in der PSU aktiv, digitales Audio in CD-qualität verfügbar und Ausgaben auf Displays oder LEDs verfügbar. Im Passanger Address Betrieb (CS 25.1423) ist die PSU aus dem "essential bus" (Notversorgung) versorgt, die digitale Verarbeitung in der PSU ausgeschaltet und analoges Audio verfügbar.

Im normalen Betrieb werden die PSU (Passenger Service Units) von einem zentralen Rechner mit 28V DC aus dem normalen Netz des Flugzeugs versorgt, Audiodaten in CD-Qualität parallel an alle PSUs über einen Bus übertragen, der CAN Bus als HW- und Protokollebene verwendet. Es findet eine Verwendung eines Audio-Codecs statt. Eine Decodierung und Verstärkung der Audiodaten findet in der Processing Einheit der PSUs statt. Gleichzeitig kann jede PSU andere Kommandos (Schaltzustände etc.) empfangen und eigene an die zentrale Einheit versenden (Passenger Request, ...).

Im Emergency Betrieb gemäß Passenger Address (CS 25.1423) versorgt der zentrale Rechner die PSU aus dem 28V DC Essential Bus. Über den CAN Bus werden alle PSU kommandiert, ihre Processing Einheit und alle weiteren evtl. vorhandenen Komponenten (Display, Lampen, etc.) abzuschalten. Danach werden keine digitalen Daten mehr über diesen Bus gesendet, aktiv bleibt nur noch der Ausgangsverstärker jeder PSU, dessen Eingang gleichzeitig auf den CAN Bus geschaltet wird. Der notwendige Stromverbrauch sinkt dadurch signifikant, Audiodaten werden nun analog auf die physikalische Ebene des CAN Bus eingekoppelt und in den PSUs jeweils entsprechend auf den Ausgangsverstärker geschaltet. Dieser Modus wird durch einen Aus- und Einschaltvorgang der PSUs, gesteuert durch den zentralen Rechner, beendet. Nach Power-Up arbeiten die PSU wieder im Normalmodus.

Gemäß der Erfindung ergibt sich eine digitale bzw. analoge Audioübertragung über einen CAN-Bus. Es liegt CD-Qualität durch digitale Übertragung im Normalbetrieb vor, außerdem bzw. zusätzlich jedoch eine vollständige Realisierung der CS 25.1423-Anforderungen bei geringem Stromverbrauch.

Weitere Merkmale, Wirkungen und Vorteile der Erfindung ergeben sich aus der nachfolgenden Beschreibung eines bevorzugten Ausführungsbeispiels der Erfindung sowie der beigefügten Figur. Dabei zeigt in einer schematischen Prinzipskizze:

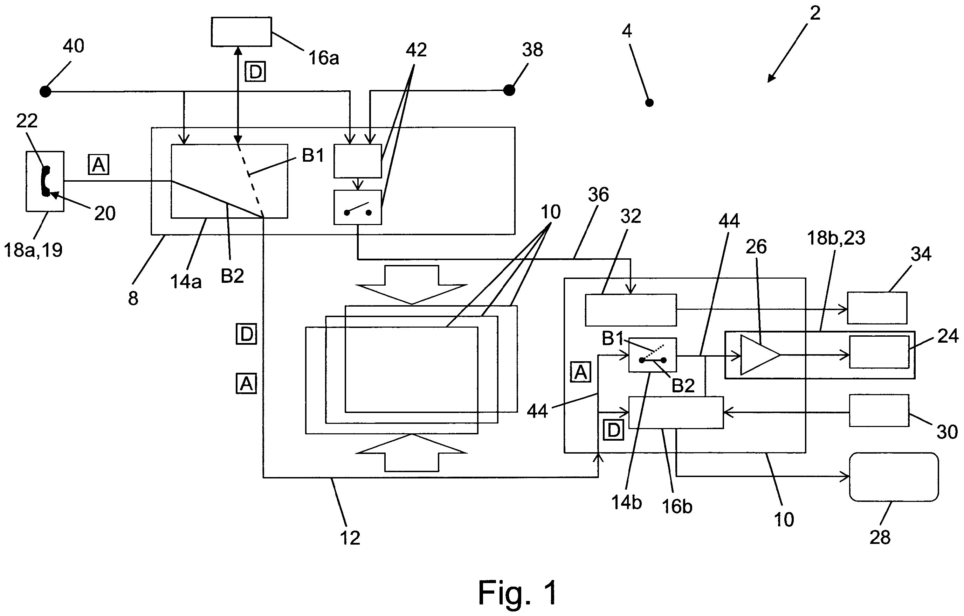

- Figur 1: ein Flugzeug mit erfindungsgemäßer Anordnung.

Figur 1 zeigt symbolisch eine Anordnung 2, die in einem nur angedeuteten Flugzeug 4 installiert ist. Die Anordnung dient zur Übertragung eines analogen Audiosignals A von einer Signalquelle 18a zu einer Signalsenke 18b. Die Anordnung enthält eine Eingabeeinheit 8 und eine Ausgabeeinheit 10, die über eine Leitung 12 verbunden sind. Die Leitung 12 ist im Beispiel ein CAN-Bus und dreiadrig ausgeführt. Die Anordnung 2 enthält ein erstes Schaltelement 14a. Dieses verbindet in einem ersten Betriebszustand B1 (gestrichelt angedeutet) in der Eingabeeinheit 8 eine Leitung 12 (deren erstes Ende) mit einem ersten digitalen Transceiver 16a. In einem zweiten Betriebszustand B2 (ausgezogen dargestellt) verbindet es dagegen die Leitung 12 mit der Signalquelle 18a für das Audiosignal A. Die Anordnung 2 enthält ein zweites Schaltelement 14b. Dieses verbindet im ersten Betriebszustand B1 die Leitung 12 (deren zweites Ende) mit einem zweiten digitalen Transceiver 16b. Im zweiten Betriebszustand B2 verbindet es die Leitung 12 mit der analogen Signalsenke 18b für das Audiosignal A. Im ersten Betriebszustand B1 ist die Leitung 12 als digitaler Datenbus betrieben im zweiten Betriebszustand B2 als analoge Signalleitung. Im Beispiel ist die Signalquelle 18a eine Mikrofoneinheit 19, mit einem Mikrofon 20 in einem Handgerät 22 (Handset) und die Signalsenke 18b eine Lautsprechereinheit 23 mit Lautsprecher 24 und analogem Audioverstärker 26. Die Leitung 12 ist eine CAN-Bus-Leitung.

Der erste Betriebszustand B1 ist ein regulärer Normalbetrieb der Anordnung 2, der Betriebszustand B2 ein Notfallbetrieb (Passenger-Address (CS 25.1423)).

Das Flugzeug 4 enthält eine Vielzahl von PSUs, die in Figur 1 lediglich symbolisch angedeutet sind. Die Ausgabeeinheiten 10 sind die PSUs. Lediglich eine der PSUs ist beispielhaft detailliert dargestellt.

Die Eingabeeinheit 8 ist eine Zentraleinheit (central unit), die zur Versorgung der Ausgabeeinheiten 10 mit digitalen Daten D im ersten Betriebszustand B1 ausgebildet ist. Daten D sind in diesem Fall nicht näher dargestellte digitale Audiodaten zur Ausgabe am Lautsprecher 24 über den zweiten Transceiver 16b, hier einem Prozessor, Ausgabedaten für Symbole auf Anzeigeeinheiten 28, hier beispielhaft einem Anschnallzeichen, sowie zu empfangende Mitteilungsdaten von der PSU an die Zentraleinheit etwa durch Drücken eines Serviceknopfes 30. Die PSU verfügt auch über eine Leistungslogik 32, die unter anderem ein schaltbares Leselicht 34 versorgt, welches ebenfalls über digital übertragene Daten D auf der Leitung 12 im ersten Betriebszustand B1 vermittels der Leistungslogik 32 schaltbar ist.

Die Ausgabeeinheit 10 ist über einen Leistungsanschluss 36 aus der Eingabeeinheit 8 mit Energie versorgt, hier mit 28 Volt Gleichstrom. Die Eingabeeinheit 8 ist hierbei sowohl aus einem regulären Flugzeugbordnetz 38 (hier 28 Volt DC) oder einem Notversorgungsnetz 40 (28 Volt essential bus) mit Energie versorgt. Die Umschaltung zwischen beiden Energieversorgungen erfolgt durch nicht näher erläuterte Schaltelemente 42.

Nach einem Einschaltvorgang, das heißt nach Anlegen der Spannung aus dem Flugzeugbordnetz 38 oder dem Notversorgungsnetz 40 gelangt die Anordnung 2 bzw. befindet sich diese im ersten Betriebszustand B1.

Im zweiten Betriebszustand B2 werden alle für die Übertragung des Audiosignals A nicht benötigten Komponenten der Anordnung ausgeschaltet. Im Beispiel sind dies das Leselicht 34, der zweite Transceiver 16b, die Anzeigeeinheit 28 und der Serviceknopf 30. Diese Komponenten weisen dann keine Energieaufnahme mehr auf. Im ersten Betriebszustand B1 erfolgt die Versorgung der Anordnung 2 mit Energie mindestens aus dem regulären Flugzeugbordnetz 38, im zweiten Betriebszustand B2 mindestens aus dem Notversorgungsnetz 40.
Das erste Schaltelement 14a ist im Beispiel ein elektronisches Schaltelement, hier ein Prozessor, welcher wahlweise die Leitung 12 im Analog- oder Digitalbetrieb bzw. Busbetrieb ansteuert und hierzu Signale entweder das Audiosignal A von der Signalquelle 18a auf die Leitung 12 gibt oder Daten D zwischen Transceiver 16a und Leitung 12 austauscht.

Das zweite Schaltelement 14b dagegen ist ein diskreter Schalter. Die Leitung 12 ist im zweiten Betriebszustand B2 mit Hilfe des Schalters mit der Signalsenke 18b durch einen analogen Leitungspfad 44 galvanisch verbunden. Der Leitungspfad 44 ist im ersten Betriebszustand B1 durch Öffnen des Schalters, also mit Hilfe des Schalters galvanisch getrennt.

Mit Hilfe der Anordnung 2 wird folgendes Verfahren durchgeführt:
Das Verfahren dient im Flugzeug 4 zur Übertragung des analogen Audiosignals A von der Signalquelle 18a zur Signalsenke 18b. Das Flugzeug enthält die Leitung 12, die (deren eines Ende) mit der Signalquelle 18a und (deren anderes Ende) mit der Signalsenke 18b verbindbar ist bzw. im zweiten Betriebszustand B2 verbunden wird. Die Leitung 12 wird im ersten Betriebszustand B1 als digitaler Datenbus betrieben und im zweiten Betriebszustand als analoge Signalleitung betrieben. Zur Übertragung des Audiosignals A wird die Leitung 12 in den zweiten Betriebszustand B2 gebracht und das Audiosignal A von der Signalquelle 18a über die Leitung 12 zur Signalsenke 18b übertragen.

Im ersten Betriebszustand B1 wird die Leitung 12 (deren eines Ende) mit dem ersten digitalen Transceiver 16a und (deren anderes Ende) mit dem zweiten digitalen Transceiver 16b verbunden. Die Leitung 12 stellt dann auch einen "PSU-Bus" dar.

Im ersten Betriebszustand werden die Eingabeeinheit 8, die Ausgabeeinheit 10 (und angeschlossene Komponenten 23, 28, 30, 34, 16b, 32) und die Leitung 12 mindestens aus dem regulären Flugzeugbordnetz 38 mit Energie versorgt. Im zweiten Betriebszustand B2 wird die Leitung 12, die Signalquelle 18a und die Signalsenke 18b mindestens aus dem Notversorgungsnetz 40 mit Energie versorgt. Im zweiten Betriebszustand B2 wird die Leitung 12 mit Hilfe des diskreten Schalters in Form des zweiten Schaltelements 14b über den Leitungspfad 44 galvanisch mit der Signalsenke 18b verbunden und dient als analoge Audioleitung, wobei dieser Leitungspfad 44 im ersten Betriebszustand B1 mit Hilfe des diskreten Schalters galvanisch getrennt wird.

### Bezugszeichenliste

- 2: Anordnung
- 4: Flugzeug
- 8: Eingabeeinheit
- 10: Ausgabeeinheit
- 12: Leitung
- 14a: erstes Schaltelement
- 14b: zweites Schaltelement
- 16a: erster Transceiver
- 16b: zweiter Transceiver
- 18a: Signalquelle
- 18b: Signalsenke
- 19: Mikrofoneinheit
- 20: Mikrofon
- 22: Handgerätes
- 23: Lautsprechereinheit
- 24: Lautsprecher
- 26: analoger Audioverstärker
- 28: Anzeigeeinheit
- 30: Serviceknopf
- 32: Leistungslogik
- 34: Leselicht
- 36: Leistungsanschluss
- 38: Flugzeugbordnetz
- 40: Notversorgungsnetz
- 42: Schaltelement
- 44: analoger Leitungspfad

- B1: erster Betriebszustand
- B2: zweiter Betriebszustand
- D: Daten
- A: Audiosignal (analog)

## Patentansprüche

1. Anordnung (2) für ein Flugzeug (4) zur Übertragung eines analogen Audiosignals (A) von einer Signalquelle (18a) zu einer Signalsenke (18b),
- wobei die Anordnung (2) eine mindestens zweiadrig ausgeführte Leitung (12) enthält,
- mit einem ersten Schaltelement (14a), um die Leitung (12) in einem ersten Betriebszustand (B1) mit einem ersten digitalen Transceiver (16a) und in einem zweiten Betriebszustand (B2) mit der analogen Signalquelle (18a) für das Audiosignal (A) zu verbinden,
- mit einem zweiten Schaltelement (14b), um die Leitung (12) im ersten Betriebszustand (B1) mit einem zweiten digitalen Transceiver (16b) und im zweiten Betriebszustand (B2) mit der analogen Signalsenke (18b) für das Audiosignal (A) zu verbinden,
- wobei die Leitung (12) im ersten Betriebszustand (B1) als digitaler Datenbus zur Übertragung von Daten (D) zwischen den beiden digitalen Transceivern (16a,b) und im zweiten Betriebszustand (B2) als analoge Signalleitung zur Übertragung des analogen Audiosignals (A) von der Signalquelle (18a) zu der Signalsenke (18b) betrieben ist.

2. Anordnung (2) nach Anspruch 1,
**dadurch gekennzeichnet, dass**
die Leitung (12) eine CAN-Bus-Leitung ist.

3. Anordnung (2) nach einem der vorhergehenden Ansprüche,
**dadurch gekennzeichnet, dass**
der erste Betriebszustand (B1) ein regulärer Normalbetrieb und der zweite Betriebszustand (B2) ein Notfallbetrieb ist.

4. Anordnung (2) nach einem der vorhergehenden Ansprüche,
**dadurch gekennzeichnet, dass**
die Signalsenke (18b) eine Lautsprechereinheit (23) ist und/oder die Signalquelle (18a) eine Mikrofoneinheit (19) ist.

5. Anordnung (2) nach einem der vorhergehenden Ansprüche,
**dadurch gekennzeichnet, dass**
das Flugzeug (4) eine Ausgabeeinheit (10) in Form einer PSU enthält, und/oder eine Eingabeeinheit (8) in Form einer Zentraleinheit enthält, die zur Versorgung der PSU mit Daten (D) im ersten Betriebszustand (B1) ausgebildet ist.

6. Anordnung (2) nach einem der vorhergehenden Ansprüche,
**dadurch gekennzeichnet, dass**
der erste Betriebszustand (B1) derjenige ist, in dem sich die Anordnung (2) nach einem Einschaltvorgang befindet und/oder dass im zweiten Betriebszustand (B2) alle für die Übertragung des Audiosignals (A) nicht benötigten Komponenten der Anordnung (2) ausgeschaltet sind.

7. Anordnung (2) nach einem der vorhergehenden Ansprüche,
**dadurch gekennzeichnet, dass**
die Anordnung (2) im ersten Betriebszustand (B1) mindestens aus einem regulären Flugzeugbordnetz (38) und im zweiten Betriebszustand (B2) mindestens aus einem Notversorgungsnetz (40) mit Energie versorgt ist.

8. Anordnung (2) nach Anspruch 7,
**dadurch gekennzeichnet, dass**
in der Anordnung (2) die Signalquelle (18a) aus dem regulären Flugzeugbordnetz (38) und/oder dem Notversorgungsnetz (40) versorgt ist und die Leitung (12) und/oder die Signalsenke (18b) aus der Signalquelle (18a) und/oder einer Eingabeeinheit (8) versorgt ist.

9. Anordnung (2) nach einem der Ansprüche 1 bis 8,
**dadurch gekennzeichnet, dass**
das erste (14a) und/oder zweite Schaltelement (14b) ein elektronisches Schaltelement enthält.

10. Anordnung (2) nach einem der Ansprüche 1 bis 8,
**dadurch gekennzeichnet, dass**
das erste (14a) und/oder zweite Schaltelement (14b) einen diskreten Schalter enthält, wobei die Leitung (12) im zweiten Betriebszustand (B2) mit Hilfe des Schalters mit der Signalquelle (18a) und/oder mit der Signalsenke (18b) durch einen analogen Leitungspfad (44) galvanisch verbunden ist und im ersten Betriebszustand (B1) der Leitungspfad (44) mit Hilfe des Schalters galvanisch getrennt ist.

11. Verfahren für ein Flugzeug (4) zur Übertragung eines analogen Audiosignals (A) von einer Signalquelle (18a) zu einer Signalsenke (18b),
- wobei das Flugzeug (4) eine mindestens zweiadrig ausgeführte Leitung (12) enthält, und
- die Leitung (12) in einem zweiten Betriebszustand (B2) mit der analogen Signalquelle (18a) und der analogen Signalsenke (18b) für das Audiosignal (A) verbunden wird, bei dem
- die Leitung (12) in einem ersten Betriebszustand (B1) als digitaler Datenbus zur Übertragung von Daten (D) betrieben wird und in einem zweiten Betriebszustand (B2) als analoge Signalleitung betrieben wird,
- die Leitung (12) zur Übertragung des Audiosignals (A) in den zweiten Betriebszustand (B2) gebracht wird und das Audiosignal (A) von der Signalquelle (18a) über die Leitung (12) zur Signalsenke (18b) übertragen wird.

12. Verfahren nach Anspruch 11,
**dadurch gekennzeichnet, dass**
- die Leitung (12) im ersten Betriebszustand (B1) mit einem ersten digitalen Transceiver (16a) und mit einem zweiten digitalen Transceiver (16b) verbunden wird.

13. Verfahren nach einem der Ansprüche 11 bis 12,
**dadurch gekennzeichnet, dass**
die Leitung (12) im ersten Betriebszustand (B1) mindestens aus einem regulären Flugzeugbordnetz (38) und im zweiten Betriebszustand (B2) die Leitung (12), die Signalquelle (18a) und die Signalsenke (18b) mindestens aus einem Notversorgungsnetz (40) mit Energie versorgt werden.

14. Verfahren nach einem der Ansprüche 11 bis 13,
**dadurch gekennzeichnet, dass**
die Leitung (12) mit Hilfe eines diskreten Schalters als erstem (14a) und/oder zweitem Schaltelement (14b) im zweiten Betriebszustand (B2) mit der Signalquelle (18a) und/oder mit der Signalsenke (18b) durch einen analogen Leitungspfad (44) galvanisch verbunden wird und im ersten Betriebszustand (B1) der Leitungspfad (44) mit Hilfe des diskreten Schalters galvanisch getrennt wird.

15. Verfahren nach einem der Ansprüche 11 bis 14,
**dadurch gekennzeichnet, dass**
das Verfahren mit Hilfe einer Anordnung (2) nach einem der Ansprüche 1 bis 10 durchgeführt wird.

## Claims

1. Assembly (2) for an airplane (4) for transmitting an analog audio signal (A) from a signal source (18a) to a signal sink (18b),
- wherein the assembly (2) contains a line (12) designed with at least two wires,
- with a first switching element (14a) to connect the line (12) in a first operating mode (B1) to a first digital transceiver (16a) and in a second operating mode (B2) to the analog signal source (18a) for the audio signal (A),
- with a second switching element (14b) to connect the line (12) in the first operating mode (B1) to a second digital transceiver (16b) and in the second operating mode (B2) to the analog signal sink (18b) for the audio signal (A),
- wherein the line (12) is operated in the first operating mode (B1) as a digital data bus to transmit data (D) between the two digital transceivers (16a,b) and in the second operating mode (B2) as an analog signal line to transmit the analog audio signal (A) from the signal source (18a) to the signal sink (18b).

2. Assembly (2) according to Claim 1,
**characterized in that**
the line (12) is a CAN bus line.

3. Assembly (2) according to either of the preceding claims,
**characterized in that**
the first operating mode (B1) is a standard normal operation and the second operating mode (B2) is an emergency operation.

4. Assembly (2) according to one of the preceding claims,
**characterized in that**
the signal sink (18b) is a loudspeaker unit (23) and/or the signal source (18a) is a microphone unit (19).

5. Assembly (2) according to one of the preceding claims,
**characterized in that**
the airplane (4) contains an output unit (10) in the form of a PSU and/or an input unit (8) in the form of a central unit which is designed to supply the PSU with data (D) in the first operating mode (B1).

6. Assembly (2) according to one of the preceding claims,
**characterized in that**
the first operating mode (B1) is the operating mode to which the assembly (2) is set following a switch-on procedure and/or **in that**, in the second operating mode (B2), all components of the assembly (2) which are not required for transmitting the audio signal (A) are switched off.

7. Assembly (2) according to one of the preceding claims,
**characterized in that**
the assembly (2) is supplied with power in the first operating mode (B1) at least from a normal airplane on-board power supply system (38) and in the second operating mode (B2) at least from an emergency power supply system (40).

8. Assembly (2) according to Claim 7,
**characterized in that**
in the assembly (2), the signal source (18a) is supplied from the normal airplane on-board power supply system (38) and/or the emergency power supply system (40) and the line (12) and/or the signal sink (18b) is/are supplied from the signal source (18a) and/or an input unit (8).

9. Assembly (2) according to one of Claims 1 to 8,
**characterized in that**
the first (14a) and/or second switching element (14b) contain(s) an electronic switching element.

10. Assembly (2) according to one of Claims 1 to 8,
**characterized in that**
the first (14a) and/or second switching element (14b) contain(s) a discrete switch, wherein the line (12) is electrically connected in the second operating mode (B2) using the switch to the signal source (18a) and/or to the signal sink (18b) by means of an analog line path (44), and the line path (44) is electrically isolated in the first operating mode (B1) using the switch.

11. Method for an airplane (4) for transmitting an analog audio signal (A) from a signal source (18a) to a signal sink (18b),
- wherein the airplane (4) contains a line (12) designed with at least two wires, and
- the line (12) is connected in a second operating mode (B2) to the analog signal source (18a) and the analog signal sink (18b) for the audio signal (A), wherein
- the line (12) is operated in a first operating mode (B1) as a digital data bus for transmitting data (D) and is operated in a second operating mode (B2) as an analog signal line,
- the line (12) is switched to the second operating mode (B2) for transmitting the audio signal (A) and the audio signal (A) is transmitted from the signal source (18a) via the line (12) to the signal sink (18b).

12. Method according to Claim 11,
**characterized in that**
- the line (12) is connected in the first operating mode (B1) to a first digital transceiver (16a) and to a second digital transceiver (16b).

13. Method according to one of Claims 11 to 12,
**characterized in that**
the line (12) is supplied with power in the first operating mode (B1) at least from a normal airplane on-board power supply system (38), and the line (12), the signal source (18a) and the signal sink (18b) are supplied with power in the second operating mode (B2) at least from an emergency power supply system (40).

14. Method according to one of Claims 11 to 13,
**characterized in that**
the line (12) is electrically connected to the signal source (18a) and/or to the signal sink (18b) in the second operating mode (B2) by means of an analog line path (44) using a discrete switch as the first (14a) and/or second switching element (14b), and the line path (44) is electrically isolated in the first operating mode (B1) using the discrete switch.

15. Method according to one of Claims 11 to 14,
**characterized in that**
the method is carried out using an assembly (2) according to one of Claims 1 to 10.

## Revendications

1. Ensemble (2) destiné à un aéronef (4) pour transmettre un signal audio analogique (A) d'une source de signal (18a) à un récepteur de signal (18b),
- l'ensemble (2) contenant une ligne au moins bifilaire (12), l'ensemble comprenant
- un premier élément de commutation (14a) destiné à relier la ligne (12) dans un premier état de fonctionnement (B1) à un premier émetteur-récepteur numérique (16a) et dans un deuxième état de fonctionnement (B2) à la source de signal analogique (18a) destinée au signal audio (A),
- un deuxième élément de commutation (14b) destiné à relier la ligne (12) dans le premier état de fonctionnement (B1) à un deuxième émetteur-récepteur numérique (16b) et dans le deuxième état de fonctionnement (B2) au récepteur de signal analogique (18b) destiné au signal audio (A),
- la ligne (12) étant utilisée dans le premier état de fonctionnement (B1) comme bus de données numériques pour transmettre des données (D) entre les deux émetteurs-récepteurs numériques (16a, b) et dans le deuxième état de fonctionnement (B2) comme ligne de signal analogique pour transmettre le signal audio analogique (A) de la source de signal (18a) au récepteur de signal (18b).

2. Ensemble (2) selon la revendication 1,
**caractérisé en ce que**
la ligne (12) est une ligne de bus CAN.

3. Ensemble (2) selon l'une des revendications précédentes,
**caractérisé en ce que**
le premier état de fonctionnement (B1) est un fonctionnement normal régulier et le deuxième état de fonctionnement (B2) est un fonctionnement d'urgence.

4. Ensemble (2) selon l'une des revendications précédentes,
**caractérisé en ce que**
le récepteur de signal (18b) est une unité formant haut-parleur (23) et/ou la source de signal (18a) est une unité formant microphone (19).

5. Ensemble (2) selon l'une des revendications précédentes,
**caractérisé en ce que**
l'aéronef (4) contient une unité de sortie (10) se présentant sous la forme d'une PSU, et/ou contient une unité d'entrée (8) se présentant sous la forme d'une unité centrale qui est conçue pour alimenter la PSU en données (D) dans le premier état de fonctionnement (B1) .

6. Ensemble (2) selon l'une des revendications précédentes,
**caractérisé en ce que**
le premier état de fonctionnement (B1) est celui dans lequel l'ensemble (2) se trouve après un processus d'activation et/ou **en ce que** dans le deuxième état de fonctionnement (B2) tous les composants de l'ensemble (2) qui ne sont pas nécessaires à la transmission du signal audio (A) sont désactivés.

7. Ensemble (2) selon l'une des revendications précédentes,
**caractérisé en ce que**
l'ensemble (2) est alimenté en énergie dans le premier état de fonctionnement (B1) à partir d'au moins un réseau de bord d'aéronef régulier (38) et dans le deuxième état de fonctionnement (B2) à partir d'au moins un réseau d'alimentation de secours (40).

8. Ensemble (2) selon la revendication 7,
**caractérisé en ce que**
dans l'ensemble (2) la source de signal (18a) est alimentée par le réseau de bord d'aéronef régulier (38) et/ou le réseau d'alimentation de secours (40) et la ligne (12) et/ou le récepteur de signal (18b) sont alimentés à partir de la source de signal (18a) et/ou d'une unité d'entrée (8).

9. Ensemble (2) selon l'une des revendications 1 à 8,
**caractérisé en ce que**
le premier (14a) et/ou le deuxième élément de commutation (14b) contient un élément de commutation électronique.

10. Ensemble (2) selon l'une des revendications 1 à 8,
**caractérisé en ce que**
le premier (14a) et/ou le deuxième élément de commutation (14b) contient un commutateur discret, la ligne (12) étant reliée galvaniquement dans le deuxième état de fonctionnement (B2) à la source de signal (18a) et/ou au récepteur de signal (18b) par un chemin de ligne analogique (44) à l'aide du commutateur et le chemin de ligne (44) étant séparé galvaniquement dans le premier état de fonctionnement (B1) à l'aide du commutateur.

11. Procédé destiné à un aéronef (4) pour transmettre un signal audio analogique (A) d'une source de signal (18a) à un récepteur de signal (18b),
- l'aéronef (4) contenant une ligne au moins bifilaire (12), et
- la ligne (12) étant reliée dans un deuxième état de fonctionnement (B2) à la source de signal analogique (18a) et au récepteur de signal analogique (18b) destinés au signal audio (A), procédé dans lequel
- la ligne (12) est utilisée dans un premier état de fonctionnement (B1) comme bus de données numériques pour transmettre des données (D) et dans un deuxième état de fonctionnement (B2) comme ligne de signal analogique,
- la ligne (12) est amenée dans le deuxième état de fonctionnement (B2) pour transmettre le signal audio (A) et le signal audio (A) est transmis de la source de signal (18a) au récepteur de signal (18b) par le biais de la ligne (12).

12. Procédé selon la revendication 11,
**caractérisé en ce que**
- la ligne (12) est reliée dans le premier état de fonctionnement (B1) à un premier émetteur-récepteur numérique (16a) et à un deuxième émetteur-récepteur numérique (16b).

13. Procédé selon l'une des revendications 11 et 12,
**caractérisé en ce que**
la ligne (12) est alimentée en énergie dans le premier état de fonctionnement (B1) par au moins un réseau de bord d'aéronef régulier (38) et dans le deuxième état de fonctionnement (B2) la ligne (12), la source de signal (18a) et le récepteur de signal (18b) sont alimentés en énergie par au moins un réseau d'alimentation de secours (40).

14. Procédé selon l'une des revendications 11 à 13,
**caractérisé en ce que**
la ligne (12) est reliée galvaniquement dans le deuxième état de fonctionnement (B2) à la source de signal (18a) et/ou au récepteur de signal (18b) par un chemin de ligne analogique (44) à l'aide du commutateur discret utilisé comme premier (14a) et/ou deuxième élément de commutation (14b) et le chemin de ligne (44) est séparé galvaniquement dans le premier état de fonctionnement (B1) à l'aide du commutateur discret.

15. Procédé selon l'une des revendications 11 à 14,
**caractérisé en ce que**
le procédé est réalisé à l'aide d'un ensemble (2) selon l'une des revendications 1 à 10.
